# EUROPÄISCHE PATENTSCHRIFT

(11) **EP 4 448 435 B1**
(45) Veröffentlichungstag und Bekanntmachung des Hinweises auf die Patenterteilung: **25.02.2026**
(21) Anmeldenummer: 23702434.4
(22) Anmeldetag: 27.01.2023
(51) Int. Cl.: B66C 13/46

(54) **KRAN**
CRANE
GRUE

(30) Priorität: 11.02.2022 DE 102022103283
(43) Veröffentlichungstag der Anmeldung: 23.10.2024
(73) Patentinhaber: Liebherr-Werk Biberach GmbH, 88400 Biberach an der Riss (DE)
(72) Erfinder: SCHOLZ, Tobias, 88400 Biberach (DE); KREGER, Michael, 88433 Schemmerhofen (DE); STURM, Sebastian, 88441 Mittelbiberach (DE)
(74) Vertreter: Lorenz Seidler Gossel Part. mbB
(86) Internationale Anmeldenummer: PCT/EP2023/052023
(87) Internationale Veröffentlichungsnummer: WO 2023/151967

(56) Entgegenhaltungen:
- EP-A1- 3 915 928
- CN-A- 113 148 879

## Beschreibung

Die vorliegende Erfindung betrifft einen Kran beispielsweise in Form eines Turmdrehkrans, mit einem Kranausleger, von dem aus über ein Hubseil ein Lastaufnahmemittel wie Lasthaken anhebbar und absenkbar ist.

Bei großen Kranen wie Turmdrehkranen oder Teleskopauslegerkranen werden Lasten oft in relativ großer Entfernung von einer Kranführerkabine angehoben oder abgesetzt bzw. an eine bestimmte Position manövriert, sodass der Lasthaken bzw. die daran angeschlagene Last von der Kranführerkabine aus schlecht zu sehen ist. Die Kranführerkabine kann bei einem Turmdrehkran am oberen Teil des Turms bzw. direkt unter dem Ausleger oder bei anderen Krantypen wie Teleskopauslegerkranen am Oberwagen angeordnet sein, wobei sich die relativ große Entfernung zum Lasthaken bzw. der angeschlagenen Last einerseits aus der relativ großen Ausladung des Auslegers ergibt und andererseits auch durch die Höhe des Auslegers und die relativ große Senktiefe des Lasthakens bedingt sein kann. Das Hubseil kann beispielsweise über eine Laufkatze vom Ausleger ablaufen, die am Ausleger in Längsrichtung verfahrbar ist, oder auch von der Auslegerspitze ablaufen.

Um näher am Lasthaken bzw. der anzuschlagenden Last zu sein, kann der Kranführer die Kranbewegungen ggf. auch mittels einer Fernsteuerung steuern, um den Lasthaken beim Steuern des Krans besser sehen zu können. Alternativ kann der Kranführer auch mit einem Einweiser zusammenarbeiten, der sich in der Nähe der Aufnahme- bzw. Abstellposition auf der Baustelle aufhält, um den Lasthaken zu sehen und dem Kranführer die Hakenposition mitteilt oder Verfahrinstruktionen erteilt, beispielsweise von Lastnähe aus per Sprechfunk und/oder Handy und/oder Handzeichen. Steht kein Einweiser zur Verfügung oder ist die Verbindung des Sprechfunkgeräts oder auch die Sicht schlecht bzw. abbrechend, ist eine genaue Positionierung des Lasthakens relativ zur aufzunehmenden Last bzw. der Last relativ zum Absetzort nicht verlässlich möglich.

Der Kranführer erhält von der Sensorik des Krans zwar üblicherweise eine Information über die Senktiefe des Lasthakens angezeigt bzw. bereitgestellt, die die Senktiefe des Kranhakens unter dem Ausleger angibt, was aber aus verschiedenen Gründen die Informationen bzw. Anweisungen des Einweisers oder auch den eigenen Sichtkontakt des Kranführers nicht ersetzen kann, um den Lasthaken bzw. die daran angehängte Last präzise ins Ziel zu manövrieren. Zum einen ist die Senktiefe alleine wenig hilfreich, wenn der Boden uneben ist oder allgemein die Höhe der Aufnahme- bzw. Absetzfläche bzw. deren Niveauunterschied zum Aufstellplatz des Krans nicht bekannt ist. Zum anderen werden die eigentlichen Lasten auch oft über ein in der Länge nicht näher spezifiziertes Gehänge wie Schlupfe oder Ketten am Lasthaken angehängt. Auch die Last selbst kann in ihren Abmessungen variieren bzw. unbekannt sein. Hieraus ergibt sich, dass der Kranfahrer den Abstand zwischen Lasthaken und Lastende ebenso wie den Abstand vom Lastende zu darunter befindlichen Gegenständen bzw. zum Boden nicht genau kennt und diesen nur grob abschätzen kann. Gleichfalls eine Schwierigkeit stellt das Arbeiten in Schächten oder hinter Sichtkanten dar, da hier keine oder nur schlechte Sicht vorhanden ist.

Aus den genannten Gründen wird insofern fast immer ein Einweiser am Aufnahme- bzw. Abstellort benötigt. Steht ein solcher Einweiser jedoch nicht zur Verfügung oder ist die Verbindung des Sprechfunkgeräts oder des Handys oder auch nur die Sicht schlecht bzw. abbrechend, wird es schwierig, den Lasthaken und die daran angeschlagene Last sicher zu manövrieren und präzise abzusetzen bzw. aufzunehmen.

Es wurden daher bereits Lasthaken-Positionsbestimmungseinrichtungen vorgeschlagen, die dem Kranführer genauere Informationen über die exakte Position des Lasthakens geben. Beispielsweise beschreibt die DE 20 2019 102 393 U1 einen Turmdrehkran mit mehreren elektromagnetischen Funkmodulen, die am Ausleger und am Lasthaken befestigt sind und aus deren Funksignalen eine elektronische Auswerteeinrichtung die Position des Lasthakens bestimmt. Aus der WO 2005/082770 A1 ist ferner ein Turmdrehkran bekannt, an dessen Laufkatze eine nach unten blickende Kamera angebracht ist, um dem Kranführer ein Videobild der Lasthaken-Umgebung anzuzeigen, sodass der Kranführer in Bewegungsrichtung liegende Hindernisse besser erkennen kann. Ähnliche Videoassistenzsysteme sind auch aus den Schriften DE 197 25 315 C2, JP 9-142773 und EP 29 31 649 B1 bekannt. Auch wenn diese Assistenzsysteme es dem Kranführer leichter machen, den Lasthaken bzw. die daran angeschlagene Last in horizontaler Richtung bzw. in der horizontalen Ebene genauer zu positionieren, bleibt es für den Kranführer doch schwierig, die Senktiefe des Lasthakens passend und präzise zu steuern, um ein sanftes Absetzen der Last und ein ruckfreies Aufnehmen der Last zu erzielen, vgl. auch CN 113148879 A und EP 3915928 A1. EP3915928A1 offenbart den Oberbegriff des Anspruchs 1.

Der vorliegenden Erfindung liegt dem gegenüber die Aufgabe zugrunde, einen verbesserten Kran der genannten Art zu schaffen, der Nachteile des Standes der Technik vermeidet und letzteren in vorteilhafter Weise weiterbildet. Insbesondere soll auch ohne Einweiser am Aufnahme- bzw. Abstellort ein exaktes und passendes Steuern der Senktiefe des Lasthakens ermöglicht werden, um ein sanftes Absetzen und Aufnehmen einer Last zu erreichen.

Erfindungsgemäß wird die genannte Aufgabe durch einen Kran gemäß Anspruch 1 gelöst. Bevorzugte Ausgestaltungen der Erfindung sind Gegenstand der abhängigen Ansprüche.

Es wird also vorgeschlagen, die Höhe des Lastaufnahmemittels über dem Boden bzw. über einer darunter befindlichen Oberfläche automatisch oder halbautomatisch zu bestimmen und der Kransteuerung oder dem Kranführer eine diese Höhe angebende Höheninformation bereitzustellen. Erfindungsgemäß ist an dem Lastaufnahmemittel eine Erfassungseinrichtung zum Erfassen des Abstands des Lastaufnahmemittels vom Boden und/oder von einem Objekt, das sich jeweils unter dem Lastaufnahmemittel befindet. Anders als bei herkömmlichen Senktiefe-Anzeigen wird also nicht - oder nicht nur - vom Lastaufnahmemittel nach oben zum Kranausleger gemessen, sondern vom Lastaufnahmemittel der Abstand nach unten bestimmt, den das Lastaufnahmemittel nach unten zum Boden bzw. einem unter dem Lastaufnahmemittel befindlichen Objekt hat. Hierdurch können auch bei unbekannten Gehängen wie nicht näher spezifizierten Ketten, unbekannten Dimensionen bzw. Höhenerstreckungen der Last oder nicht einsehbaren und unbekannten Höhenniveaus des Abstell- bzw. Aufnahmeorts auch ohne einen Einweiser passende Manövrierbewegungen des Lastaufnahmemittels präzise gesteuert werden, um ein sanftes Absetzen und ruckfreies Aufnahmen einer Last zu gestatten. Insbesondere ist kein Rückwärtsrechnen von der Senktiefe unter ggf. notwendiger Abschätzung des Niveauunterschieds zwischen Kranaufstellort und Absetz- bzw. Aufnahmeort nötig, um den exakten Höhenabstand des Lastaufnahmemittels von der relevanten Kontur unterhalb des Lastaufnahmemittels zu bestimmen.

Gemäß der Erfindung weist die Erfassungseinrichtung eine optische Sensorik mit einer nach unten zum Boden gerichteten Erfassungsachse zur Abstandserfassung auf. Eine solche optische Erfassung gestattet nicht nur eine präzise Abstandserfassung des Lastaufnahmemittels zum Boden hin bzw. zu einem unter dem Lastaufnahmemittel befindlichen Objekt hin, sondern kann auch dazu genutzt werden, dem Kranführer eine optische Information über die Konturen der aufgenommenen Last und/oder zu Umgebungskonturen bereitzustellen.

Eine solche optische Sensorik kann beispielsweise einen Lasermesskopf am Lastaufnahmemittel umfassen, der mit einem nach unten zum Boden hin gerichteten Lasermessstrahl den Abstand des Lastaufnahmemittels zum Boden hin bzw. zu einem unter dem Lastaufnahmemittel befindlichen Objekt bestimmen kann.

Erfindungsgemäß umfasst die optische Sensorik eine bildgebende Sensorik, die vom Lastaufnahmemittel aus nach unten blickt und nach Art einer Draufsicht ein Bild des unter dem Lastaufnahmemittel befindlichen Objekts bzw. des dortigen Bodens bereitstellt. Mittels einer Bildauswerteeinrichtung kann aus den Signalen der bildgebenden Sensorik der Abstand bestimmt werden.

Die genannte bildgebende Sensorik ist stereoskopisch bzw. stereooptisch arbeitend ausgebildet und umfasst zwei voneinander beabstandete, jeweils nach unten blickende bzw. gerichtete optische Sensoren und/oder Kameras, die von zwei voneinander beabstandeten Punkten aus und insofern mit zwei leicht unterschiedlichen Blickachsen zwei Bilder des Bereichs unterhalb des Lastaufnahmemittels bereitstellen. Durch den Blickachsenversatz der beiden optischen Sensoren bzw. der beiden Kameras kann die Bildauswerteeinrichtung anhand von in den Bildern identifizierten Konturen und/oder Pixeln und/oder Bildpunkten den Abstand der Kontur bzw. des Flächenpunkts, der dem Pixel bzw. Bildpunkt entspricht, vom Lastaufnahmemittel bestimmen.

Ein großer Vorteil von solchen optischen Sensoren wie Kameras ist es, dass sie keinen Drift aufweisen und die Genauigkeit der Entfernungsmessung sich auch über einen längeren Zeitraum nicht ändert. Zudem wird die Umgebung nicht nur punktuell erfasst, sondern großflächig abgebildet, so dass sich gegenüber anderen Sensorsystemen der Vorteil bietet, dass mit nur zwei Sensoren bzw. nur zwei Kameras ein großer Bereich abgedeckt werden kann. Zudem ergibt sich durch ein solches stereooptisches Sensorsystem grundsätzlich die Möglichkeit, ein unter dem Lastaufnahmemittel befindliches Objekt auch dreidimensional zu erfassen bzw. die relative 3D-Position eines abgebildeten Objekts zu bestimmen.

Die Bildauswertung kann dabei grundsätzlich in verschiedener Weise erfolgen. Beispielsweise kann die Bildauswerteeinrichtung ein Triangulationsmodul aufweisen, das dazu ausgebildet ist, aus der bekannten Beabstandung der beiden optischen Sensoren bzw. Kameras und der Parallaxe bzw. der Verschiebung korrespondierender Punkte zwischen den Bildern die Tiefenentfernung zwischen der Sensor- bzw. Kameraebene und dem Objekt bzw. Boden zu berechnen.

Die beiden Sensoren bzw. Kameras der stereoskopischen Sensorik können vorteilhafterweise in einer liegenden Ebene voneinander beabstandet im Bereich des Lastaufnahmemittels montiert sein bzw. auf gleichem Höhenniveau in der Nähe des Lastaufnahmemittels angeordnet sein, um aus zumindest näherungsweise gleicher Höhe nach unten auf den Boden bzw. ein unter dem Lastaufnahmemittel befindliches Objekt zu blicken.

Vorteilhafterweise können die bildgebenden Sensoren bzw. Kameras auf gegenüberliegenden Seiten des Lastaufnahmemittels angeordnet sein und/oder Blick- bzw. Erfassungsachsen aufweisen, die in aufrechter Richtung auf verschiedenen Seiten des Lastaufnahmemittels angeordnet sind.

In vorteilhafter Weiterbildung der Erfindung kann die Sensorik an einer Unterflasche montiert sein, an der das Hubseil eingeschert ist und an der das Lastaufnahmemittel beispielsweise in Form eines Lasthakens befestigt ist. Eine solche Unterflasche nimmt üblicherweise eine vorbestimmte Ausrichtung ein, die es den daran montierten Sensoren bzw. Kameras ermöglicht, nach unten zu blicken.

Beispielsweise kann an der Unterflasche ein Sensorikträger angebracht sein, der sich näherungsweise koaxial zur Drehachse der Umlenkrolle der Unterflasche erstrecken und/oder zu gegenüberliegenden Seiten von der Unterflasche hin auskragen kann, so dass die Sensoren bzw. Kameras auf gegenüberliegenden Seiten der Unterflasche nach unten blickend montiert werden können. Der genannte Träger kann ggf. teleskopierbar und/oder einschiebbar und/oder anklappbar ausgebildet sein, um in eine nicht auskragende Verstaustellung und eine auskragende Arbeitsstellung verbracht werden zu können. In letzterer sind die beiden Sensoren bzw. Kameras dann durch einen vorbestimmten Abstand voneinander beabstandet, wobei der genannte Abstand die Basislinie bzw. Base Line des Stereoskopsystems bilden kann.

Die Auswerteeinrichtung, die die Signale der optischen Sensorik auswertet und den Abstand des Lastaufnahmemittels zum Boden bzw. einem darunter befindlichen Objekt bestimmt, kann in Weiterbildung der Erfindung zusammen mit der Sensorik im Bereich des Lasthakens angebracht bzw. montiert sein, so dass eine Signalauswertung ohne Zeitversatz durch längere Übertragungswege möglich ist. Alternativ wäre es aber ebenfalls möglich, die Auswerteeinrichtung oder zumindest ein Teilmodul der Auswerteeinrichtung an einem anderen Kranstukturbauteil wie beispielsweise dem Ausleger oder einem Turm oder generell einer Drehbühne oder einem Unterwagen anzubringen und die von der Sensorik dorthin übertragenen Signale dort auszuwerten, um den Abstand des Lastaufnahmemittels vom Boden bzw. einer darunter befindlichen Objektkontur zu bestimmen.

Die genannte Erfassungseinrichtung am Lastaufnahmemittel und ggf. weitere dort angeordnete Komponenten wie die genannte Bildauswerteeinrichtung können aus einem Akku und/oder einer Batterie oder allgemein aus einem Energiespeicher mit elektrischer Energie versorgt werden. Insbesondere kann auch eine Signal- bzw. Datenübertragungseinrichtung, mit Hilfe derer die Signale der Sensorik und/oder die schon ausgewerteten Abstands- bzw. Höheninformationen an eine Kransteuerung übertragen werden können, aus dem Energiespeicher mit elektrischer Energie versorgt werden.

Die genannte Signal- und/oder Datenübertragungseinrichtung kann vorteilhafterweise drahtlos arbeitend ausgebildet sein, beispielsweise ein Funkmodul aufweisen.

Alternativ oder zusätzlich zu einem Energiespeicher am Lastaufnahmemittel kann elektrische Energie auch unmittelbar am Lastaufnahmemittel, insbesondere einer damit verbundenen Unterflasche zum Umlenken des Hubseils erzeugt werden. In vorteilhafter Weiterbildung der Erfindung kann am Lastaufnahmemittel bzw. einer damit verbundenen Unterflasche ein Generator zum Stromerzeugen angeordnet sein, der von einer Umlenk- und/oder Laufrolle und/oder von dem um die Umlenkrolle umlaufenden Hubseil angetrieben werden kann. Beispielsweise kann der Generator über eine Stirnrad- oder Kegelradstufe mit der Umlenkrolle antriebsverbunden sein, oder ein auf dem Hubseil ablaufendes Antriebsrad aufweisen.

Dabei kann der vom Generator bereitgestellte Strom direkt an den Verbraucher, d.h. die Sensorik und/oder die Auswerteeinrichtung und/oder die Datenübertragungseinrichtung bereitgestellt werden, ggf. über eine Leistungs- und/oder Speise- und/oder Ansteuerelektronik, und/oder zumindest teilweise in einen als Puffer fungierenden elektrischen Speicher gespeist werden, von dem aus dann die gespeicherte Energie zum jeweiligen Verbraucher gegeben wird. Ein solcher elektrischer Zwischenspeicher kann beispielsweise ein Akku oder eine Batterie oder auch ein Kondensator sein bzw. solche Bausteine umfassen.

Die Erfindung wird nachfolgend anhand eines bevorzugten Ausführungsbeispiels und zugehörigen Zeichnungen näher erläutert. In den Zeichnungen zeigen:
- Fig. 1:: eine Seitenansicht eines Krans nach einer vorteilhaften Ausführung der Erfindung, an dessen Lastaufnahmemittel eine Erfassungseinrichtung mit einer bildgebenden Sensorik zum Erfassen des Abstands des Lastaufnahmemittels vom Boden und/oder einem Objekt unter dem Lastaufnahmemittel vorgesehen ist,
- Fig. 2:: die Erfassungseinrichtung einschließlich der bildgebenden, stereooptischen Sensorik am Lastaufnahmemittel des Krans aus Fig. 1, wobei die Teilansichten (a) und (b) die Sensorik an der Unterflasche aus horizontalen, um 90° zueinander verkippten Blickrichtungen zeigt,
- Fig. 3:: eine Seitenansicht der stereoskopischen Sensorik am Lastaufnahmemittel und einer darunter befindlichen Last, sowie die beiden zueinander verschobenen Erfassungsbereiche der beiden bildgebenden Sensoren bzw. Kameras der stereooptischen Sensorik, und
- Fig. 4:: eine Seitenansicht der stereoskopischen Sensorik ähnlich Fig. 3, wobei ohne einer am Lastaufnahmemittel angebrachten Last die beiden zueinander versetzten, auf den Boden fallenden optischen Erfassungsbereiche der beiden bildgebenden Sensoren bzw. Kameras dargestellt sind.

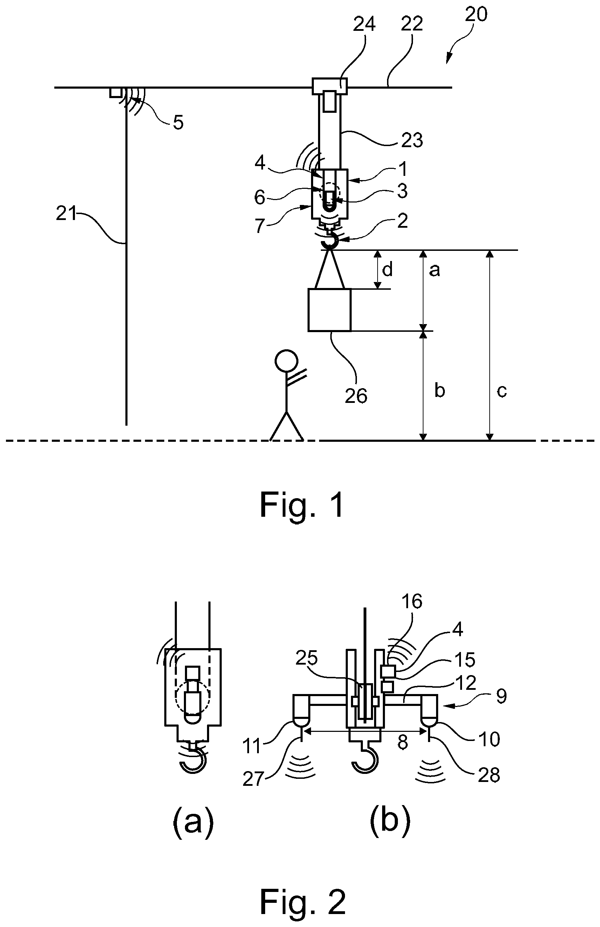

Wie Fig. 1 zeigt, kann der Kran 20 beispielsweise als Turmdrehkran ausgebildet sein und einen Ausleger 22 aufweisen, der im Falle eines Turmdrehkrans auf einem Turm 21 angebracht sein und von diesem auskragen kann. Entlang des Auslegers 22 kann eine Laufkatze 24 durch einen Katzantrieb verfahrbar sein, wobei ein Hubseil 23 von der genannten Laufkatze 24 ablaufen kann, um ein am Hubseil 23 befestigtes Lastaufnahmemittel 2 beispielsweise in Form eines Lasthakens anheben und absenken und durch die Laufkatze 24 auch horizontal verfahren zu können. Zusätzlich kann der Kran 20 beispielsweise um die aufrechte Turmachse durch ein Drehwerk verdreht werden, so dass der Ausleger 22 schwenkt. Ohne dargestellt zu sein, wäre es auch möglich, den Ausleger 22 durch einen Wippantrieb auf und nieder wippen zu können.

Durch die genannten Bewegungen der Kranstruktur und das Einholen bzw. Ablassen des Hubseils 23 kann das Lastaufnahmemittel 2 in gewünschter Weise dirigiert bzw. manövriert werden. Die Kranantriebe, beispielsweise der Hubseilantrieb, der Katzfahrantrieb, der Drehwerksantrieb und/oder der Wippantrieb können von einer zentralen Kransteuervorrichtung 5 angesteuert werden, wobei die Kransteuervorrichtung 5 in an sich bekannter Weise Eingabemittel wie Joysticks, Drehschalter oder andere Bedientasten aufweisen kann, die es dem Kranführer ermöglichen, die Kranantriebe zu betätigen. Alternativ oder zusätzlich kann die Kransteuervorrichtung 5 aber auch ein Automatik- bzw. Halbautomatikmodul aufweisen, um vorbestimmte Verfahrwege mit dem Lastaufnahmemittel 2 automatisiert abfahren zu können.

Das genannte Lastaufnahmemittel 2 in Form des Lasthakens kann an einer Unterflasche 1 befestigt sein, an der das Hubseil 23 eingeschert ist, wobei an der Unterflasche 1 eine oder mehrere Umlenkrollen 25 drehbar gelagert sein können, um das Hubseil 23 umzulenken, vgl. Fig. 2.

An dem Lastaufnahmemittel 2, genauer gesagt an der Unterflasche 1 ist eine Erfassungseinrichtung 3 angeordnet, mit Hilfe derer der Abstand c des Lastaufnahmemittels 2 vom Boden und/oder der Abstand d des Lastaufnahmemittels 2 zur Oberkante einer angehängten Last 26 und/oder der Abstand a des Lastaufnahmemittels 2 von einer Unterkante der genannten Last 26 und/oder auch der Abstand b der genannte Unterkante der Last 26 vom Boden bestimmt werden kann. Die genannten Abstände a, b, c, d meinen dabei den vertikalen Abstand und/oder die Höhendifferenz zwischen dem Lastaufnahmemittel 2 und den genannten Konturen bzw. auch von der Unterkante der Last 26 zum Boden.

Die genannten Tiefeninformationen bzw. Abstände a, b, c, d können der Kransteuervorrichtung 5 übermittelt werden, um auf einer Anzeigevorrichtung angezeigt bzw. allgemein ausgegeben werden zu können, was ggf. auch akustisch erfolgen kann. Vorzugsweise kann der Abstand aber auf einem Bildschirm angezeigt werden.

Alternativ oder zusätzlich zu einem Anzeigen der genannten Tiefeninformation bzw. Abstandsinformation a, b, c, d kann die Kransteuervorrichtung 5 diese Höhen- bzw. Tiefeninformation aber auch dazu verwenden, um einen Absenk- oder Hubvorgang automatisiert zu steuern.

Wie die Figuren zeigen, umfasst die Erfassungseinrichtung 3 eine stereoskopische Sensorik 9, die zwei optische bzw. bildgebende Sensoren bzw. Kameras 10, 11 umfasst, die im Wesentlichen senkrecht nach unten gerichtete Erfassungsachsen besitzen, vgl. Fig. 2. Die beiden Kameras 10, 11 sind dabei auf im Wesentlichen gleichem Höhenniveau angebracht.

Wie Fig. 2 zeigt, sind die beiden Kameras 10, 11 quer zu ihren Erfassungsachsen voneinander beabstandet angeordnet, so dass zwischen den Erfassungsachsen der Kameras 10, 11 eine Basislinie 8 gebildet wird, die einen vorbestimmten horizontalen Abstand der Kameras 10, 11 voneinander definiert.

**In** vorteilhafter Weiterbildung der Erfindung können die beiden Kameras 10, 11 an der Unterflasche 1 montiert sein, insbesondere auf gegenüberliegenden Seiten hiervon. Beispielsweise kann ein Sensorträger 12 zu gegenüberliegenden Seiten hin von der Unterflasche 1 auskragen, wobei der Sensorträger 12 sich beispielsweise etwa koaxial oder parallel zu der Rotationsachse einer Umlenkrolle 25 an der Unterflasche 1 erstrecken kann. Die Kameras 10, 11 können vorteilhafterweise auf gegenüberliegenden Seiten, insbesondere etwa gleich weit beabstandet von einer Hubseilebene angeordnet sein, die von den Strängen des Hubseils 23 definiert wird, vgl. Fig. 2.

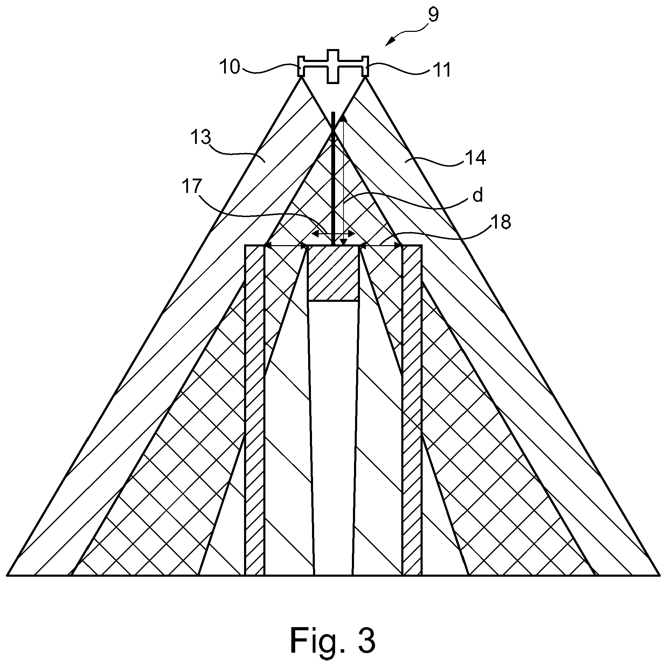

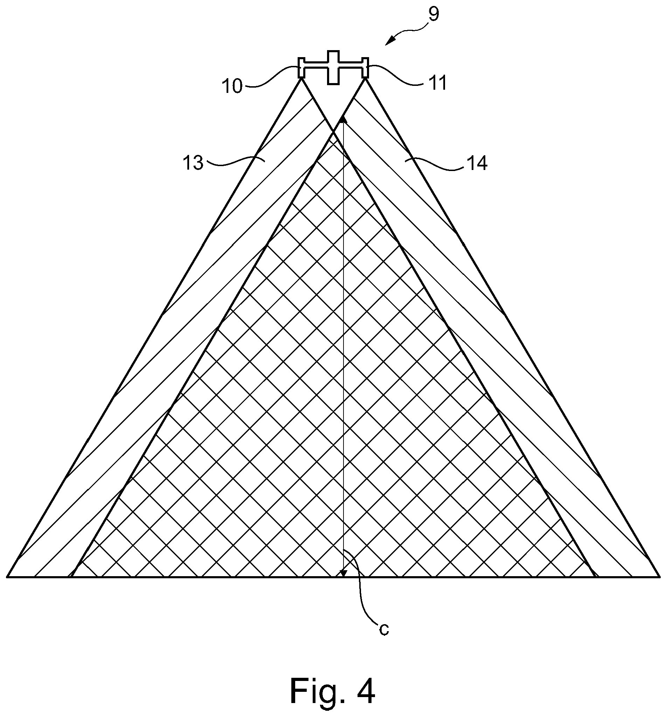

Wie die Figuren 3 und 4 zeigen, haben die beiden Kameras 10, 11 jeweils einen vom Lastaufnahmemittel 2 nach unten gerichteten Erfassungsbereich 13, 14, der sich von den Kameras 10, 11 aus nach unten kegelförmig aufweiten kann. Die beiden Erfassungsbereiche 13, 14 sind zueinander entsprechend der Basislinie 8 bzw. der Beabstandung der beiden Kameras voneinander zueinander versetzt angeordnet bzw. verschoben. Aus dieser Parallaxe bzw. der bekannten Länge der Basislinie 8 können aus den Bildern der Kameras 10, 11, genauer gesagt aus der Verschiebung korrespondierender Punkte zwischen den beiden Bildern die Tiefenentfernung im Sinne der vorgenannten Abstände a, b, c und/oder d bestimmt werden. Die hierzu vorgesehene Bildauswerteeinrichtung 4 kann beispielsweise ein Triangulationsmodul 15 aufweisen, welches aus der bekannten Basislinie 8 und der geometrischen Lage einander korrespondierender Bildpunkte die Tiefe im Sinne der Abstände a, b, c und/oder d berechnen kann. Die genannte Bildauswerteeinrichtung 10 kann beispielsweise eine Recheneinrichtung umfassend einen Mikroprozessor, einen Programmspeicher und/oder Datenspeicher zum Speichern eines Softwarebausteins und/oder der auszuwertenden Signale umfassen.

Wie die Figuren zeigen, kann die genannte Bildauswerteeinrichtung 4 vorteilhafterweise ebenfalls am Lastaufnahmemittel 2 angebracht sein, beispielsweise an der Unterflasche 1 montiert sein, um dort aus den Bildern der stereoskopischen Sensorik 9 die Tiefeninformationen a, b, c und/oder d zu ermitteln.

Die genannte Bildauswerteeinrichtung 9 kann dabei aus einem Energiespeicher 6 beispielsweise in Form einer Batterie oder eines Akkus mit elektrischer Energie versorgt werden.

Alternativ oder zusätzlich kann am Lastaufnahmemittel 2, insbesondere an der Unterflasche 1 ein Generator 7 vorgesehen sein, um aus Bewegungen des Hubseils 23 und/oder einer Umlenkrolle 25 der Unterflasche 1 elektrische Energie zu erzeugen, die in den genannten Energiespeicher 6 eingespeist oder auch direkt der Bildauswerteeinrichtung 4 und/oder der Erfassungseinrichtung 3, insbesondere den Kameras 10, 11 bereitgestellt werden kann.

Vorteilhafterweise kann die Bildauswerteeinrichtung 4, ggf. auch die Erfassungseinrichtung 3 an eine Signal- und/oder Datenübertragungseinrichtung 16 angebunden sein, um die Tiefeninformationen a, b, c und/oder d und/oder auch Signale der bildgebenden Sensorik an die Kransteuerung 5 vorzugsweise drahtlos übermitteln zu können. Die genannte Datenübertragungseinrichtung 16 kann beispielsweise ein Funkmodul umfassen, um die genannten Informationen per Funk zu übertragen.

Die Datenübertragungseinrichtung 16 kann vorteilhafterweise ebenfalls aus dem Energiespeicher 6 mit elektrischer Energie versorgt und/oder aus dem Generator 7 gespeist werden.

Die Bildauswerteeinrichtung 4 kann vorteilhafterweise nicht nur die genannten Tiefeninformationen a, b, c und/oder d bestimmen, sondern auch die Konturen der Last 26 und/oder Konturen am Boden in einer Draufsicht bestimmen, beispielsweise die Breite und/oder Länge der Last 26 in der Draufsicht und/oder deren horizontale Beabstandung 18 von Schachtwänden 19, vgl. Fig. 3.

Die von der Bildauswerteeinrichtung 4 bestimmten Tiefeninformationen a, b, c und/oder d sowie auch die genannten Konturinformationen beispielsweise im Sinne der Lastbreite 17 und/oder der Beabstandung 18 von Bodenkontur können von der Kransteuervorrichtung 5 verwendet werden, um in einem automatisierten Betrieb die Kranantriebe zu steuern und/oder auf einer Anzeigevorrichtung dem Kranführer bereitgestellt werden, wobei der Kranführer den Kran von der Kranführerkabine aus und/oder per Fernsteuerung und/oder auch per Teleoperationsbetrieb steuern kann. Je nachdem kann die Anzeigevorrichtung in der Kranführerkabine oder am Fernsteuerstand oder einer Funkfernsteuerung vorgesehen sein.

## Patentansprüche

1. Kran, insbesondere Turmdrehkran, mit einem Kranausleger (22), von dem aus über ein Hubseil (23) ein Lastaufnahmemittel (2) wie Lasthaken anhebbar und absenkbar ist, wobei an dem Lastaufnahmemittel (2) eine Erfassungseinrichtung (3) zum Erfassen der Höhe (A, B, C, D) des Lastaufnahmemittels (2) über dem Boden und/oder über einem Objekt (26) unter dem Lastaufnahmemittel (2) vorgesehen ist, **dadurch gekennzeichnet, dass** die Erfassungseinrichtung (3) eine stereooptische Sensorik (9) mit zwei voneinander beabstandeten, jeweils nach unten zum Boden hin gerichteten optischen Sensoren und/oder Kameras (19, 11) mit zwei jeweils nach unten zum Boden gerichteten, etwa parallelen Erfassungsachsen (27, 28), die voneinander durch eine Basislinie (8) beabstandet sind, und zwei einander überlappenden Erfassungsbereichen (13, 14) aufweist, wobei eine Bildauswerteeinrichtung (4) zum Auswerten der optischen Signale und/oder Bilder der stereooptischen Sensorik (9) vorgesehen und dazu ausgebildet ist, aus den genannten optischen Signalen und/oder Bildern die Höhe des Lastaufnahmemittels (2) über dem Boden oder über dem unter dem Lastaufnahmemittel befindlichen Objekt zu bestimmen.

2. Kran nach dem vorhergehenden Anspruch, wobei die Bildauswerteeinrichtung (4) einen Triangulationsbaustein (15) zum Bestimmen des genannten Abstands (A, B, C, D) durch Triangulation anhand der bekannten Beabstandung (8) der Sensoren und/oder Kameras (10, 11) voneinander und anhand korrespondierender Bildpunkte aufweist.

3. Kran nach einem der vorhergehenden Ansprüche, wobei die Erfassungseinrichtung (3) an einer Unterflasche (1) montiert ist, an der das Hubseil (23) eingeschert und das Lastaufnahmemittel (2) befestigt ist.

4. Kran nach einem der vorhergehenden Ansprüche, wobei die Erfassungseinrichtung (3) einen Sensorträger (12) umfasst, der vom Lastaufnahmemittel (2) und/oder einer/der Unterflasche (1) zu gegenüberliegenden Seiten hin auskragt.

5. Kran nach einem der vorhergehenden Ansprüche, wobei die beiden optischen Sensoren und/oder Kameras (10, 11) der stereooptischen Sensorik (9) auf gegenüberliegenden Seiten des Lastaufnahmemittels (2) angeordnet sind, insbesondere auf im wesentlichen gleichen Höhenniveaus.

6. Kran nach einem der vorhergehenden Ansprüche, wobei die Bildauswerteeinrichtung (4) zusammen mit der optischen Sensorik (9) am Lastaufnahmemittel (2) und/oder einer/der damit verbundenen Unterflasche (1) montiert ist.

7. Kran nach einem der vorhergehenden Ansprüche, wobei die Erfassungseinrichtung (3) eine drahtlose Datenübertragungseinrichtung (16) zum Übertragen der bestimmten Abstandsinformationen und/oder der Sensorsignale der optischen Sensorik (9) zu einer zentralen Kransteuervorrichtung (5) aufweist, wobei die genannte Datenübertragungseinrichtung (16) an dem Lastaufnahmemittel (2) und/oder einer/der damit verbundenen Unterflasche (1) angeordnet ist.

8. Kran nach einem der vorhergehenden Ansprüche, wobei an dem Lastaufnahmemittel (2) ein Energiespeicher (6) zum Versorgen der Erfassungseinrichtung (3) mit elektrischer Energie vorgesehen ist.

9. Kran nach einem der vorhergehenden Ansprüche, wobei an dem Lastaufnahmemittel (2) und/oder einer damit verbundenen Unterflasche (1) ein Generator (7) zum Erzeugen von elektrischer Energie aus einer Bewegung des Hubseils (23) und/oder einer Bewegung einer des Hubseils (23) umlenkenden Umlenkrolle (25) aufweist.

10. Kran nach einem der vorhergehenden Ansprüche, wobei die Erfassungseinrichtung (3) dazu ausgebildet ist, Konturinformationen in einer Draufsicht, insbesondere eine Breite (17) einer aufgenommenen Last (26) und/oder eine horizontale Beabstandung (18) einer aufgenommenen Last (26) von einer Bodenkontur, zu erfassen und als Draufsichtinformation bereitzustellen.

## Claims

1. Crane, in particular a rotating tower crane, comprising a crane boom (22), from which a load-receiving means (2), such as a load hook, can be raised and lowered by means of a hoist rope (23), wherein a detection device (3) for detecting the height (A, B, C, D) of the load-receiving means (2) above the ground and/or above an object (26) located beneath the load-receiving means (2) is provided on the load-receiving means (2), **characterized in that** the detection device (3) comprises a stereo-optical sensor system (9) having two optical sensors and/or cameras (10, 11) spaced apart from one another and each directed downwardly toward the ground, with two approximately parallel detection axes (27, 28) which are spaced apart from one another by a baseline (8), and with two mutually overlapping detection regions (13, 14), and that an image evaluation device (4) is provided and configured to evaluate the optical signals and/or images of the stereo-optical sensor system (9) and to determine, from said optical signals and/or images, the height of the load-receiving means (2) above the ground or above the object located beneath the load-receiving means.

2. Crane according to the preceding claim, wherein the image evaluation device (4) comprises a triangulation module (15) for determining said distance (A, B, C, D) by triangulation on the basis of the known spacing (8) of the sensors and/or cameras (10, 11) from one another and on the basis of corresponding image points.

3. Crane according to one of the preceding claims, wherein the detection device (3) is mounted on a lower block (1) on which the hoist rope (23) is reeved and to which the load-receiving means (2) is fastened.

4. Crane according to one of the preceding claims, wherein the detection device (3) comprises a sensor carrier (12) which protrudes from the load-receiving means (2) and/or the lower block (1) toward opposite sides.

5. Crane according to one of the preceding claims, wherein the two optical sensors and/or cameras (10, 11) of the stereo-optical sensor system (9) are arranged on opposite sides of the load-receiving means (2), in particular at substantially the same height levels.

6. Crane according to one of the preceding claims, wherein the image evaluation device (4), together with the optical sensor system (9), is mounted on the load-receiving means (2) and/or on the lower block (1) connected thereto.

7. Crane according to one of the preceding claims, wherein the detection device (3) comprises a wireless data transmission device (16) for transmitting the determined distance information and/or the sensor signals of the optical sensor system (9) to a central crane control device (5), wherein said data transmission device (16) is arranged on the load-receiving means (2) and/or on the lower block (1) connected thereto.

8. Crane according to one of the preceding claims, wherein an energy storage device (6) for supplying the detection device (3) with electrical energy is provided on the load-receiving means (2).

9. Crane according to one of the preceding claims, wherein the load-receiving means (2) and/or the lower block (1) connected thereto comprises a generator (7) for generating electrical energy from a movement of the hoist rope (23) and/or from a movement of a deflection pulley (25) deflecting the hoist rope (23).

10. Crane according to one of the preceding claims, wherein the detection device (3) is configured to detect contour information in a plan view, in particular a width (17) of a suspended load (26) and/or a horizontal spacing (18) of a suspended load (26) from a ground contour, and to provide said information as plan-view information.

## Revendications

1. Grue, en particulier grue à tour pivotante, comprenant une flèche de grue (22) à partir de laquelle un moyen de préhension de charge (2), tel qu'un crochet de charge, peut être levé et abaissé au moyen d'un câble de levage (23), le moyen de préhension de charge (2) étant pourvu d'un dispositif de détection (3) destiné à détecter la hauteur (A, B, C, D) du moyen de préhension de charge (2) au-dessus du sol et/ou au-dessus d'un objet (26) situé sous le moyen de préhension de charge (2), **caractérisée en ce que** le dispositif de détection (3) comprend une sensorique stéréoscopique optique (9) comportant deux capteurs optiques et/ou caméras (10, 11) espacés l'un de l'autre et chacun orienté vers le bas en direction du sol, avec deux axes de détection (27, 28) sensiblement parallèles, orientés chacun vers le bas en direction du sol, qui sont espacés l'un de l'autre par une ligne de base (8), et avec deux zones de détection (13, 14) se chevauchant l'une l'autre, et **en ce qu'**un dispositif d'analyse d'images (4) est prévu et configuré pour analyser les signaux optiques et/ou images de la sensorique stéréoscopique optique (9) et pour déterminer, à partir desdits signaux optiques et/ou images, la hauteur du moyen de préhension de charge (2) au-dessus du sol ou au-dessus de l'objet situé sous le moyen de préhension de charge.

2. Grue selon la revendication précédente, dans laquelle le dispositif d'analyse d'images (4) comprend un module de triangulation (15) destiné à déterminer ladite distance (A, B, C, D) par triangulation sur la base de l'espacement connu (8) des capteurs et/ou caméras (10, 11) l'un par rapport à l'autre et sur la base de points d'image correspondants.

3. Grue selon l'une quelconque des revendications précédentes, dans laquelle le dispositif de détection (3) est monté sur un moufle inférieur (1), sur lequel le câble de levage (23) est réengagé et auquel le moyen de préhension de charge (2) est fixé.

4. Grue selon l'une quelconque des revendications précédentes, dans laquelle le dispositif de détection (3) comprend un support de capteurs (12) qui fait saillie du moyen de préhension de charge (2) et/ou du moufle inférieur (1) vers des côtés opposés.

5. Grue selon l'une quelconque des revendications précédentes, dans laquelle les deux capteurs optiques et/ou caméras (10, 11) de la sensorique stéréoscopique optique (9) sont disposés sur des côtés opposés du moyen de préhension de charge (2), en particulier à des niveaux de hauteur sensiblement identiques.

6. Grue selon l'une quelconque des revendications précédentes, dans laquelle le dispositif d'analyse d'images (4), conjointement avec la sensorique optique (9), est monté sur le moyen de préhension de charge (2) et/ou sur le moufle inférieur (1) qui y est associé.

7. Grue selon l'une quelconque des revendications précédentes, dans laquelle le dispositif de détection (3) comprend un dispositif de transmission de données sans fil (16) destiné à transmettre les informations de distance déterminées et/ou les signaux de capteurs de la sensorique optique (9) vers un dispositif central de commande de grue (5), ledit dispositif de transmission de données (16) étant disposé sur le moyen de préhension de charge (2) et/ou sur le moufle inférieur (1) qui y est associé.

8. Grue selon l'une quelconque des revendications précédentes, dans laquelle un dispositif de stockage d'énergie (6) destiné à alimenter le dispositif de détection (3) en énergie électrique est prévu sur le moyen de préhension de charge (2).

9. Grue selon l'une quelconque des revendications précédentes, dans laquelle le moyen de préhension de charge (2) et/ou le moufle inférieur (1) qui y est associé comprend un générateur (7) destiné à produire de l'énergie électrique à partir d'un mouvement du câble de levage (23) et/ou d'un mouvement d'une poulie de renvoi (25) déviant le câble de levage (23).

10. Grue selon l'une quelconque des revendications précédentes, dans laquelle le dispositif de détection (3) est configuré pour détecter des informations de contour dans une vue en plan, en particulier une largeur (17) d'une charge suspendue (26) et/ou un espacement horizontal (18) d'une charge suspendue (26) par rapport à un contour du sol, et pour fournir ces informations en tant qu'informations de vue en plan.
